# EUROPÄISCHE PATENTANMELDUNG

(11) **EP 3 822 078 A1**
(43) Veröffentlichungstag der Anmeldung: **19.05.2021**
(21) Anmeldenummer: 19209572.7
(22) Anmeldetag: 15.11.2019
(51) Int. Cl.: B32B 37/12, C08K 5/00, C08K 5/17, C08K 5/315, C09J 5/06, C09J 7/28, C09J 7/35

(54) **ELEKTROBAND ODER -BLECH, VERFAHREN ZUR HERSTELLUNG SOLCH EINES ELEKTROBANDS ODER -BLECHS SOWIE BLECHPAKET DARAUS**

(71) Anmelder: voestalpine Stahl GmbH, 4020 Linz (AT)
(72) Erfinder: Fluch, Ronald, 4020 Linz (AT); Hector, Mendez, 4040 Linz (AT)
(74) Vertreter: Jell, Friedrich

(57) **Zusammenfassung**

Es werden ein Elektroband oder -blech mit einer auf wenigstens einer seiner Flachseiten vorgesehenen, thermohärtbaren wasserbasierten Schmelzklebelackschicht, ein Verfahren zur Herstellung solch eines Elektrobands oder -blechs sowie ein Blechpaket daraus gezeigt. Um eine besonders lagerungsfähige und alterungsstabile thermohärtbaren Schmelzklebelackschicht auf dem Elektroband oder -blech im B-Zustand zu erzeugen, wird vorgeschlagen, dass das stöchiometrische Verhältnis der Epoxidgruppen des Epoxidharzes oder der Epoxidharze zu den Wasserstoffatomen der mindestens zwei Aminogruppen des latenten Härters im Bereich von 1,33 zu 1 bis 5 zu 1, insbesondere 2,0 zu 1 bis 2,7 zu 1, liegt.

## Beschreibung

Die Erfindung betrifft ein Elektroband oder -blech mit einer auf wenigstens einer seiner Flachseiten vorgesehenen, thermohärtbaren wasserbasierten Schmelzklebelackschicht, aufweisend Epoxidharz oder einer Mischung unterschiedlicher Epoxidharze und einen bei Raumtemperatur latenten Härter, ein Verfahren zur Herstellung solch eines Elektrobands oder -blechs sowie ein Blechpaket daraus.

Aus dem Stand der Technik sind zahlreiche Verfahren zur Klebstoffbeschichtung der Oberfläche eines Elektrobands oder -blechs bekannt, um daraus abgetrennte Blechteile miteinander stoffschlüssig zu einem Blechpaket zu verkleben. Hierzu werden unter anderem wasserbasierte thermohärtbare Schmelzklebelacke verwendet, also reaktive Klebstoffsysteme mit Schmelzklebstoff - auch als Backlacke bezeichnet. Solche wasserbasierten thermohärtbaren Schmelzklebelacke werden als Beschichtung auf ein Elektroband bzw. -blech aufgebracht (EP3072936A1) und durch Trocknen, also Entfernen von Wasser bzw. gegebenenfalls vorhandenen Lösungsmitteln und Co-Löser aus der Schmelzklebelackschicht, vom A-Zustand in den B-Zustand übergeführt. Im B-Zustand ist die Schmelzklebelackschicht auf dem Elektroband bzw. -blech also durch Thermohärten weiterhin verklebbar.

Folgend werden aus solch einem Elektroband bzw. -blech abgetrennte Blechteile übereinandergestapelt und durch einen sogenannten Backprozess zunächst zum Verkleben bzw. danach zum Aushärten gebracht - das heißt, über die Parameter Druck, Temperatur und Zeit miteinander stoffschlüssig zu Paketen verbunden.

Eine Problematik, mit der sich der Stand der Technik beschäftigt, betrifft die Lagerung beschichteter Elektrobänder und -bleche im B-Zustand. Zwar finden in einer wasserbasierten Schmelzklebelackschicht Reaktionen des latenten Härters mit Epoxidharz bei Temperaturen über 35°C - vor allem, wenn in dieser kein Beschleuniger enthalten ist - relativ langsam statt, bei darüber liegenden sind solche aber schneller zu erwarten. Selbst bei einer Lagerungstemperatur bei Raumtemperatur haben die Erfinder überraschenderweise erkannt, dass sich die weitere Verarbeitbarkeit der Elektrobänder und -bleche im B-Zustand bereits nach wenigen Monaten erheblich verschlechtern kann. Dieser Effekt wurde noch nicht restlos aufgeklärt und kann auch durch Epoxidharz-Härter-Oligomere, welche sich in der Schmelzklebelackschicht im Zuge der Trocknung zur Erreichung des B-Zustands bilden können - also in der Art einer "Vorpolymerisation" -, begünstigt werden.

Im Zuge der Lagerung der Elektrobänder und -bleche im B-Zustand bilden sich langkettige Oligomere, welche zu einem unerwünschten Kalthärten mit entsprechend nachteiligen Auswirkungen auf die weitere Verklebungsfähigkeit der Schmelzklebelackschicht im B-Zustand führen.

Um auch nach zahlreichen Monaten Lagerung und/oder nach Erhöhung der Temperatur über Raumtemperatur im Zuge des Transports noch eine möglichst gute Verklebbarkeit sicherzustellen bzw. in weiterer Folge hochfeste Blechpakete mit hervorragenden magnetischen Eigenschaften herstellen zu können, schlägt der Stand der Technik beispielsweise Füllstoffe im Schmelzklebelack vor.

Die Erfindung hat sich die Aufgabe gestellt, ausgehend vom eingangs geschilderten Stand der Technik, ein Elektroband oder -blech mit einer auf wenigstens einer seiner Flachseiten vorgesehenen, thermohärtbaren wasserbasierten Schmelzklebelackschicht bzw. solche Elektrobänder oder -bleche nach Trocknung der aufgebrachten Schmelzklebelackschichten zur Verfügung zu stellen, deren Verklebungsfähigkeit reproduzierbar einstellbar ist - bzw. welche Verklebungsfähigkeit auch über Zeiträume von mehreren Monaten bzw. gegebenenfalls nach erhöhten Temperaturen im Bereich von 60°C während seines Transports möglichst stabil bleibt.

Die Erfindung löst die gestellte Aufgabe hinsichtlich des Elektrobands oder -blechs anhand der Merkmale des Anspruchs 1.

Liegt das stöchiometrische Verhältnis der Epoxidgruppen des Epoxidharzes oder der Epoxidharze zu den Wasserstoffatomen der mindestens zwei Aminogruppen des latenten Härters im Bereich von 1,33 zu 1 bis 5 zu 1 - sind also die Wasserstoffatome der Aminogruppen des latenten Härters unterstöchiometrisch in Bezug auf die Epoxidgruppen es Epoxidharzes oder der Epoxidharze-, kann eine sich eventuell ergebende Reaktion des Härters mit Epoxidgruppen des Epoxidharzes oder der Epoxidharze in der thermohärtbaren wasserbasierten Schmelzklebelackschicht gezielt gerichtet werden - sodass eine Schmelzklebelackschicht zur Verfügung gestellt wird, in der solche - unerwünschte - Reaktionen erheblich geringere negative Effekte auf die weitere Lagerfähigkeit des erfindungsgemäß beschichteten Elektrobands oder - blechs nach sich ziehen.

Überraschenderweise kann anhand des erwähnten unterstöchiometrischen Verhältnisses der Wasserstoffatome in Bezug auf die Epoxidgruppen dennoch eine ausreichende Verklebbarkeit sichergestellt werden.

Ein diesbezüglicher Faktor sind die sich erfindungsgemäß ergebenden kurzen Kettenlängen bzw. die Verminderung der Kettenverlängerung während der Lagerung aus sich gegebenenfalls miteinander verbindenden Härter- und Epoxidharzmolekülen in der thermohärtbaren wasserbasierten Schmelzklebelackschicht.

Es kann davon ausgegangen werden, dass aufgrund des genannten unterstöchiometrischen Verhältnisses der Wasserstoffatome - und der so erhaltenen statistischen Bedingungen -, sich über Raumtemperatur eventuell ergebende Reaktionen in der Schmelzklebelackschicht gezielt in Richtung Oligomere einzelner Dicyandiamidmoleküle mit jeweils bis zu zwei Epoxidharzmolekülen gelenkt werden. Hingegen ist ein Verbinden solcher Oligomere mit weiteren Härtermolekülen und/oder solcher Oligomere - also die Bildung viskositätserhöhender, langkettiger Oligomere mehrerer Dicyandiamidmoleküle mit zahlreichen Epoxidharzmolekülen -, demnach vermeidbar. Dies gilt speziell auch bei einer Temperaturerhöhung im Zuge des Aufbringens auf der thermohärtbaren wasserbasierten Schmelzklebelackschicht auf das Elektroband oder -blech und/oder bei deren nachfolgenden Trocknung.

Derartige langkettige Oligomere bedingen eine unerwünschte Kaltaushärtung der Schmelzklebelackschicht im B-Zustand, sie beeinträchtigen also unter anderem die Lagerstabilität. So bedingt die unerwünschte Kettenverlängerung ein schlechteres Aufschmelzen der Schmelzklebelackschicht und führt zu einer reduzierten Vernetzung beim Verklebungsprozess.

Überraschend zeigt sich speziell, dass nicht nur eine besonders hohe Lagerstabilität und somit Lagerfähigkeit der erfindungsgemäßen Schmelzklebelackschicht auf dem Elektroband oder -blech nach seiner Trocknung erreichbar sind, sondern, dass sich nach thermischer Aktivierung des Härters sogar eine höhere Vernetzungsdichte und damit eine verbesserte Aushärtung des Schmelzklebelacks samt erhöhter Haftfestigkeit auf dem Elektroband oder -blech ergeben kann. Dies äußerst sich letztendlich in einer erhöhten Klebefestigkeit bzw. in einem verbesserten Rollschälwiderstand der ausgehärteten Schmelzklebelackschicht.

Insbesondere kann sich das stöchiometrische Verhältnis der Epoxidgruppen des Epoxidharzes oder der Epoxidharze zu den Wasserstoffatomen der Aminogruppen des latenten Härters im Bereich von 2,0 zu 1 bis 2,7 zu 1 auszeichnen.

Im Allgemeinen wird angenommen, dass als latenter Härter ein Epoxidharzhärter geeignet ist, welcher zumindest bei Raumtemperatur dem Epoxidharz gegenüber praktisch inert ist - und mit diesem erst bei einer Temperatur insbesondere über 100 °C beim Verklebungsprozess, also beim Erreichen seiner Aktivierungstemperatur möglichst rasch reagiert.

Als Raumtemperatur werden maximal 30 °C angenommen. Oberhalb dieser Temperatur kommt es zu einer zwar langsamen, aber kontinuierlich stattfindenden Reaktion des latenten Härters mit dem Epoxidharz - welche unerwünscht ist.

Die genannten Vorteile sind besonders erreichbar bzw. ergeben sich besonders reproduzierbar, wenn der latente Härter genau zwei primäre Aminogruppen aufweist. In diesem Fall liegen also zwei Aminogruppen mit im Wesentlichen gleicher Reaktivität gegenüber Epoxidgruppen der Epoxidharzmoleküle vor. Es kann derart nämlich bei einer sich gegebenenfalls ergebenden Kettenverlängerung gezielt mit einer maximalen Kettenlänge von zwei Epoxidharzmolekülen und einem Härtermolekül - und zwar je ein Epoxidharzmolekül pro primärer Aminogruppe des latenten Härters - erreicht werden.

Vorteilhaft weist der latente Härter eine Cyanamidbasis auf, was unter anderem vergleichsweise geringe Kosten nach sich zieht.

Dicyandiamid eignet sich insbesondere, da dieses zumindest bei Raumtemperatur - sofern kein Beschleuniger in der Schmelzklebelackschicht vorliegt - praktisch inert ist gegenüber einem Epoxidharz. Des Weiteren ist die genannte, gegebenenfalls eintretende Kettenbildung von Dicyandiamid mit Epoxidharz unterhalb der Aktivierungstemperatur aufgrund seiner chemischen Struktur besonders gut kontrollierbar. Solche Reaktionen mit Epoxidharzmolekülen erfolgen praktisch ausschließlich an der oder den primären Aminogruppe/-gruppen des Dicyandiamids, welches - im Vergleich zu anderen seiner Aminogruppen eine wesentlich erhöhte Reaktivität aufweist.

Damit ist besonders zuverlässig sicherzustellen, dass sich auch bei einem folgend hergestellten, erfindungsgemäßen Elektroband oder -blech im B-Zustand selbst im Falle einer Lagerung über mehrere Monaten bzw. eventuell nach erhöhten Temperaturen sogar im Bereich von 60°C während seines Transports gegebenenfalls lediglich Reaktionen bis zur genannten maximalen Kettenlänge von zwei Epoxidharzmolekülen mit einem Dicyandiamidmolekül einstellen. Die genannten vorteilhaften Effekte sind somit durch Dicyandiamid besonders gut zu erreichen.

Eine zuverlässige, kostengünstige und besonders einfache Einstellung des erfindungsgemäßen stöchiometrischen Verhältnisses ist zusätzlich möglich, wenn Dicyandiamid als einziger latenter Härter in der wasserbasierten und in weiterer Folge getrockneten thermohärtbaren Schmelzklebelackschicht enthalten ist.

Die genannten Vorteile sind insbesondere bei einer thermohärtbaren wasserbasierten Schmelzklebelackschicht erreichbar, welche aufweist:
35 bis 55 Gew.-%, insbesondere 40 bis 50 Gew.-%, eines Epoxidharzes oder einer Mischung unterschiedlicher Epoxidharze mit einer mittleren molaren Masse von 1000 bis 2000 g/mol und
0,15 bis 1,0 Gew.-%, insbesondere 0,4 bis 0,6 Gew.-%, des latenten Härters, insbesondere Dicyandiamid.

Vorzugsweise kann die thermohärtbare wasserbasierte Schmelzklebelackschicht als Rest Wasser sowie, insbesondere 4 bis 20 Gew.-%, Co-Löser, vorzugsweise 1-Methoxy-propanol als Co-Löser, aufweisen. Somit ist eine besonders einfache und kostengünstige Zusammensetzung dieser Schmelzklebelackschicht gegeben. Durch den Einsatz des erwähnten Co-Lösers kann eine bessere Einarbeitbarkeit von Harz und Härter erzielt werden - ohne die genannten erfindungsgemäßen Vorteile zu beeinträchtigen.

Die erfindungsgemäßen Vorteile kommen - wie bereits vorstehend erwähnt - besonders auch bei einem Elektroband oder -blech mit einer auf wenigstens einer seiner Flachseiten vorgesehenen, getrockneten thermohärtbaren Schmelzklebelackschicht zum Tragen.

Der Vorgang solch einer Trocknung kann insbesondere bei 180 bis 280 °C Bandtemperatur erfolgen. Es ist üblicherweise von einer relativ kurzen Zeitdauer für solch ein Trocknen auszugehen - inkl. Aufheizen liegt diese unter einer Minute, vorzugsweise bei ca.20-35 Sekunden. Vorzugsweise erfolgt der Trocknungsprozess bei einer maximalen Bandtemperatur von 180-220 °C. Sofern die Schmelzklebelackschicht frei von Beschleuniger ist, reichen diese Trocknungsparameter - Temperatur bzw. Zeitdauer - nicht für ein Aktivieren des Härters aus.

Somit wird ein Elektroband oder -blech mit einer thermohärtbaren Schmelzklebelackschicht - also eine Schmelzklebelackschicht im B-Zustand - zur Verfügung gestellt, welche besonders robust ist - insbesondere bei einer längeren Lagerdauer über mehrere Monate und speziell auch gegenüber Temperaturerhöhung während des Transports, welche erfahrungsgemäß 60 °C betragen kann. Dieser Vorteil äußert sich unter anderem in einer Erhöhung der Klebefestigkeit der erfindungsgemäßen Schmelzklebelackschicht, was auch anhand des Rollschälwiderstands nach ihrem erfolgten Aushärten und Verkleben ersichtlich ist.

Besonders kann sich hierzu eine, insbesondere bei 180 bis 280°C Bandtemperatur, getrocknete, thermohärtbare Schmelzklebelackschicht auszeichnen, welche aufweist:
75 bis 92,8 Gew.-%, insbesondere 80 bis 90 Gew.-%, eines Epoxidharzes oder einer Mischung unterschiedlicher Epoxidharze mit einer mittleren molaren Masse von 1000 bis 2000 g/mol,
0,3 bis 2 Gew.-%, insbesondere 0,8 bis 1,2 Gew.-%, des latenten Härters, insbesondere Dicyanamid.

Weist die thermohärtbare Schmelzklebelackschicht zusätzlich ein organisches Triamin als einen mit Epoxidharz bei Raumtemperatur verbindenden Vorvernetzer auf, kann sich der erfindungsgemäße Effekt des stöchiometrischen Verhältnisses von Epoxidgruppen des Epoxidharzes oder der Epoxidharze zu den Wasserstoffatomen der Aminogruppen des latenten Härters besonders auszeichnen.

Als Vorvernetzer eignen sich besonders organische Triamine, insbesondere solche, die drei primäre Aminogruppen aufweisen. Durch diese kann sich eine Vorvernetzung, also eine Reaktion der Aminogruppen des Vorvernetzers mit reaktiven Epoxidgruppen unterschiedlicher Epoxidharzmoleküle des Epoxidharzes zu sekundären und/oder tertiären Aminen, also vergleichsweise voluminösen Verbindungen in der thermohärtbaren wasserbasierten Schmelzklebelackschicht ergeben - welche aber keine negativen Auswirkungen auf die weitere Klebefähigkeit haben.

Solch eine Vorvernetzung ist mithilfe des Vorvernetzers und des genannten stöchiometrischen Verhältnisses besonders einfach und standfest einstellbar, sodass sich die Schmelzviskosität der thermohärtbaren Schmelzklebelackschicht erhöht - und ein Ausfließen des Schmelzklebelacks während einem stoffschlüssigen Verbinden, etwa mit Blechteilen zu einem Blechpaket im Zuge eines Backprozesses, verhindert wird. Diesbezüglich kommen die genannten Effekte und Vorteile des stöchiometrischen Verhältnisses von Epoxidgruppen des Epoxidharzes oder der Epoxidharze zu den Wasserstoffatomen der Aminogruppen des latenten Härters besonders zum Tragen, da derart sichergestellt wird, dass - wie erwähnt - Reaktion gezielt in Richtung Oligomere einzelner Dicyandiamidmoleküle mit jeweils bis zu zwei Epoxidharzmolekülen gelenkt wird. Hingegen ist ein Verbinden solcher Oligomere mit weiteren Molekülen des latenten Härters und/oder solcher Oligomere miteinander und/oder mit Härtermolekülen, welche eine Verbindung mit einem Vorvernetzermolekül eingegangen sind, verbessert vermeidbar. Eine unerwünschte Beeinträchtigung der durch den Vorvernetzer erreichten Effekte kann somit gezielt verhindert werden - bzw. bleiben die erwähnten erfindungsgemäßen Vorteile hinsichtlich Lagerstabilität und -fähigkeit sowie Klebefähigkeit der Schmelzklebelackschicht bzw. deren Haftfestigkeit auf dem Elektroband oder -blech bestehen. Vielmehr kann sogar ein synergistischer Effekt des erfindungsgemäßen stöchiometrischen Verhältnisses mit den Wirkungen des Vorvernetzers festgestellt werden.

Die Stabilität der Dispersion des thermohärtbaren wasserbasierten Schmelzklebelacks während seiner Lagerung, bei seinem Aufbringen auf ein Elektroband oder -blech, seiner Trocknung und/oder der Lagerung im B-Zustand bei Raumtemperatur - sowie selbst im Falle erhöhter Temperaturen, etwa während des Transports, bei welchem durchaus 60 °C vorliegen können - ist somit verbessert sicherzustellen.

Als bevorzugt hinsichtlich der vorstehend genannten Vorteile kann sich ein Elektroband oder -blech erweisen, dessen thermohärtbare wasserbasierte Schmelzklebelackschicht aufweist:
35 bis 55 Gew.-%, insbesondere 40 bis 50 Gew.-%, eines Epoxidharzes oder einer Mischung unterschiedlicher Epoxidharze mit einer mittleren molaren Masse von 1000 bis 2000 g/mol,
0,1 bis 2 Gew.-%, insbesondere 0,2 bis 1,0 Gew.-%, des Triamin als Vorvernetzer mit einer mittleren molaren Masse von 350 bis 550 g/mol und
0,15 bis 1,0 Gew.-%, insbesondere 0,4 bis 0,6 Gew.-%, des latenten Härters, insbesondere Dicyandiamid.

Als bevorzugt hinsichtlich der vorstehend genannten Vorteile kann sich ein Elektroband oder -blech erweisen, dessen welches, insbesondere bei 180 bis 280°C Bandtemperatur, getrocknete thermohärtbare Schmelzklebelackschicht aufweist:
75 bis 92,8 Gew.-%, insbesondere 80 bis 90 Gew.-%, eines Epoxidharzes oder einer Mischung unterschiedlicher Epoxidharze mit einer mittleren molaren Masse von 1000 bis 2000 g/mol,
0,2 bis 4 Gew.-%, insbesondere 0,4 bis 2 Gew.-%, Triamin als Vorvernetzer mit einer mittleren molaren Masse von 350 bis 550 g/mol.
0,3 bis 2 Gew.-%, insbesondere 0,8 bis 1,2 Gew.-%, des latenten Härters, insbesondere Dicyanamid.

Ein vorstehend beschichtetes Elektroband oder -blech dessen thermohärtbare Schmelzklebelackschicht, insbesondere bei 180 bis 280°C Bandtemperatur, getrocknete ist, ist im Wesentlichen frei von Wasser und Co-Löser, sofern solch ein Co-Löser vor der Trocknung in der thermohärtbaren wasserbasierten Schmelzklebelackschicht enthalten war. In solch einem B-Zustand sind Lagerfähigkeit und -stabilität besonders sicher zu erreichen.

Verfahrenstechnisch einfach kann die Herstellung eines erfindungsgemäß beschichteten Elektrobands oder -blechs erfolgen durch Aufbringen, insbesondere Rollenapplikation oder Aufsprühen, des thermohärtbaren wasserbasierten Schmelzklebelacklacks auf mindestens eine Flachseite des Elektrobands oder -blechs.

Die Erfindung hat sich außerdem die Aufgabe gestellt, ein Verfahren zur Herstellung eines Blechpakets aus einem Elektroband oder -blech zur Verfügung zu stellen, welches einfach durchzuführen ist und ein Verkleben mit besonders hoher Vernetzungsdichte ermöglicht. Auch ein Ausfließen des Schmelzklebelacks während dem stoffschlüssigen Verbinden soll nicht eintreten bzw. sollen die vorteilhaften Effekte eines gegebenenfalls vorhandenen Vorvernetzers nicht beeinträchtigt werden.

Die Erfindung löst die Aufgabe hinsichtlich des Verfahrens anhand der Merkmale des Anspruchs 12.

Hierzu wird die Schmelzklebelackschicht des erfindungsgemäß beschichteten Elektrobands oder -blechs, insbesondere bei 180 bis 280 °C Bandtemperatur, getrocknet, werden Blechteile aus dem Elektroband oder -blech abgetrennt, die Blechteile zu einem Blechpaket gestapelt und das Blechpaket verklebt, insbesondere durch thermisches, bevorzugt bei 100°C bis 250°C, Aktivieren der Schmelzklebelackschicht.

Es hat sich herausgestellt, dass aufgrund des stöchiometrischen Verhältnisses von Epoxidgruppen des Epoxidharzes oder der Epoxidharze zu den Wasserstoffatomen der Aminogruppen des latenten Härters ein Blechpaket hergestellt werden kann, deren Blechteile besonders standfest miteinander verklebt sind - und zwar speziell auch nach einer Lagerung des erfindungsgemäß beschichteten Elektrobands oder -blechs über mehrere Monate bzw. über Raumtemperatur, etwa während seines Transports. Die beschriebenen Effekte der Erfindung führen dazu, dass aufgrund der beschriebenen erfindungsgemäßen Effekte letztendlich eine erhöhte Vernetzungsdichte im ausgehärteten Schmelzklebelack sowie eine besonders starke Haftfestigkeit des Schmelzklebelacks auf den Blechteilen erreicht wird. Zudem zeichnen sich solche Blechpakete durch hervorragende magnetische Eigenschaften aus.

Des Weiteren sind die erhaltenen Blechpakete anhand der durch die erfindungsgemäß verfügbaren Elektrobänder und -bleche einfach, sicher und kostengünstig herzustellen.

Im Folgenden wird beispielhaft die Erfindung anhand zweier Ausführungsvarianten beschrieben.

### Ausführungsbeispiel 1 (AB1):

Ausführungsbeispiel 1 betrifft ein siliziumlegiertes (etwa 3 % Si) Elektroband mit einer auf einer seiner Flachseiten vorgesehenen, thermohärtbaren wasserbasierten Schmelzklebelackschicht, welche per Rollenapplikation in einer Schichtdicke von 5 µm aufgebracht wurde - welche Schmelzklebelackschicht aufweist:

| | |
|---|---|
| 40,0 Gew.-% | Epoxidharz mit einer mittleren molaren Masse von 1000 g/mol |
| 1,00 Gew.-% | Dicyandiamid |
| 9,00 Gew.-% | 1-Methoxy-propanol |

und als Rest Wasser. Im Ausführungsbeispiel AB1 sind weitere Inhaltsstoffe, etwa Füllstoffe, demnach nicht enthalten. Auch Beschleuniger sind nicht vorgesehen. 100 Gramm der Rezeptur laut AB1 bedeuten somit 40,0 Gramm des Epoxidharzes mit einer mittleren molaren Masse von 1000 g/mol - und somit 0,0400 Mol an Epoxidharzmolekülen, welche Epoxidharzmoleküle jeweils zwei Epoxidgruppen aufweisen. In diesen 100 Gramm der Rezeptur laut AB1 sind des Weiteren 1,00 Gramm Dicyandiamid mit einer molaren Masse von 84,08 g/mol enthalten - somit weist dieses Beispiel 0,0120 Mol Dicyandiamidmoleküle auf, mit in Summe 4 Wasserstoffatomen der Aminogruppen pro Dicyandiamidmolekül.

Das stöchiometrische Verhältnis der Epoxidgruppen des Epoxidharzes zu den Wasserstoffatomen der Aminogruppen des Dicyandiamids als latentem Härter ist im Ausführungsbeispiel 1 demnach 0,0800 zu 0,0480, also 1,67 zu 1. Dies fällt unter das stöchiometrische Verhältnis von Anspruch 1, nämlich in den Bereich von 1,33 zu 1 bis 5 zu 1.

Die Schmelzklebelackschicht wird nach dem Aufbringen entsprechend Anspruch 12 bei einer Bandtemperatur (PMT - Peak Metal Temperature) von 220°C getrocknet. Somit wird ein, mit einer im Wesentlichen wasser- und Co-Löser-freien thermohärtbaren Schmelzklebelackschicht beschichtetes Elektroband im B-Zustand erhalten.

### Stand der Technik (SdT1):

Das bekannte Beispiel SdT1 ist ein siliziumlegiertes (etwa 3 % Si) Elektroband mit einer auf einer seiner Flachseiten vorgesehenen, thermohärtbaren wasserbasierten Schmelzklebelackschicht, welche per Rollenapplikation in einer Schichtdicke von 5 µm aufgebracht wurde - welche Schmelzklebelackschicht aufweist:

| | |
|---|---|
| 40,0 Gew.-% | Epoxidharz mit einer mittleren molaren Masse von 1000 g/mol |
| 2,00 Gew.-% | Dicyandiamid |
| 9,00 Gew.-% | 1-Methoxy-propanol |

und als Rest Wasser.

100 Gramm der Rezeptur laut SdT1 bedeuten somit 40,0 Gramm des Epoxidharzes mit einer mittleren molaren Masse von 1000 g/mol - und somit 0,0400 Mol an Epoxidharzmolekülen, welche Epoxidharzmoleküle jeweils zwei Epoxidgruppen aufweisen. In diesen 100 Gramm der Rezeptur laut SdT1 sind des Weiteren 2,00 Gramm Dicyandiamid mit einer molaren Masse von 84,08 g/mol enthalten - somit weist dieses Beispiel 0,0240 Mol Dicyandiamidmoleküle auf, mit in Summe 4 Wasserstoffatomen der Aminogruppen pro Dicyandiamidmolekül.

Das stöchiometrische Verhältnis der Epoxidgruppen des Epoxidharzes zu den Wasserstoffatomen der Aminogruppen des Dicyandiamids als latentem Härter ist im SdT1 demnach 0,0800 zu 0,0960, also 0,83 zu 1. Dies fällt nicht unter das stöchiometrische Verhältnis von Anspruch 1, nämlich in den Bereich von 1,33 zu 1 bis 5 zu 1.

Die Schmelzklebelackschicht wird nach dem Aufbringen ebenfalls bei einer Bandtemperatur (PMT - Peak Metal Temperature) von 220°C getrocknet. Somit wird ein, mit einer im Wesentlichen wasser- und Co-Löser-freien thermohärtbaren Schmelzklebelackschicht beschichtetes Elektroband im B-Zustand erhalten.

### Vergleich des Ausführungsbeispiels 1 (AB1) mit dem Stand der Technik (SdT1):

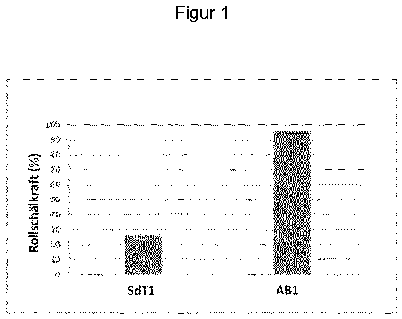

Figur 1 zeigt den Vergleich der Rollschälkraft des erfindungsgemäßen Ausführungsbeispiels 1 (AB1) mit dem Stand der Technik (SdT1).

Hierzu wurden die wie erwähnt getrockneten Elektrobänder AB1 und SdT1 über 4 Tage bei 60°C Bandtemperatur gelagert und anschließend auf Raumtemperatur abgekühlt. Danach erfolgte ein Aushärten der Schmelzklebelackschicht durch thermisches Aktivieren bei 130°C über 4 Stunden, sowie bei einem mechanischen Druck von 1 Megapascal. Zur nachfolgenden Bestimmung des Rollschälkraft wurde das Verfahren nach der ÖNORM EN 1464.2010-02 angewandt. Der Wert 100 in Figur 1 steht für die Rollschälkraft der wie erwähnt getrockneten und anschließend wie erwähnt ausgehärteten Elektrobänder AB1 und SdT1 - jedoch ohne deren Lagerung im B-Zustand über Raumtemperatur.

Für AB1 ist nach Figur 1 eine klare Erhöhung des Rollschälkraft erkennbar.

Für Probe 3 ist nach Figur 1 eine klare Erhöhung des Rollschälkraft erkennbar - was also bedeutet, dass erfindungsgemäß eine wesentlich geringere Beeinträchtigung der Klebekraft durch erhöhte Lagerungstemperatur erreicht wird.

### Ausführungsbeispiel 2 (AB2):

Ausführungsbeispiel 2 betrifft ein siliziumlegiertes (etwa 3 % Si) Elektroband mit einer auf einer seiner Flachseiten vorgesehenen, thermohärtbaren wasserbasierten Schmelzklebelackschicht, welche per Rollenapplikation in einer Schichtdicke von 5 µm aufgebracht wurde - welche Schmelzklebelackschicht aufweist:

| | |
|---|---|
| 40,00 Gew.-% | Epoxidharz mit einer mittleren molaren Masse von 1000 g/mol |
| 0,75 Gew.-% | Dicyandiamid |
| 0,75 Gew.-% | Polyethertriamin als Vorvernetzer der nachstehenden Strukturfor mel (Handelsname Jeffamine® T-403) |
| 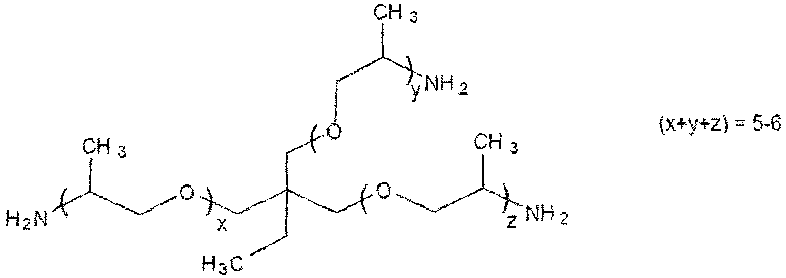 | |
| 9,0 Gew.-% | 1-Methoxy-propanol |

und als Rest Wasser. Weitere Inhaltsstoffe, etwa Füllstoffe sind vorstellbar. Weitere Inhaltsstoffe, etwa Füllstoffe sind vorstellbar, Beschleuniger werden vermieden.

100 Gramm der Rezeptur laut AB2 bedeuten somit 40,00 Gramm des Epoxidharzes mit einer mittleren molaren Masse von 1000 g/mol - und somit 0,0400 Mol an Epoxidharzmolekülen, welche Epoxidharzmoleküle jeweils zwei Epoxidgruppen aufweisen. In diesen 100 Gramm der Rezeptur laut AB2 sind des Weiteren 0,75 Gramm Dicyandiamid mit einer molaren Masse von 84,08 g/mol enthalten - somit weist dieses Beispiel 0,0088 Mol Dicyandiamidmoleküle auf, mit in Summe 4 Wasserstoffatomen der Aminogruppen pro Dicyandiamidmolekül.

Das stöchiometrische Verhältnis der Epoxidgruppen des Epoxidharzes zu den Wasserstoffatomen der Aminogruppen des Dicyandiamids als latentem Härter ist im AB2 demnach 0,0800 zu 0,0352, also 2,27 zu 1. Dies fällt unter das stöchiometrische Verhältnis von Anspruch 1, nämlich unter den Bereich von 1,33 zu 1 bis 5 zu 1 - bzw. fällt es unter den besonders bevorzugten Bereich von 2,0 zu 1 bis 2,7 zu 1.

Die folgende Trocknung, erfolgen gemäß Ausführungsbeispiel 1.

Es wurde derselbe Vergleichsversuch bezüglich der Rollschälkraft von AB2 wie vorstehend genannt durchgeführt - nämlich AB2 anstelle von AB1 im Vergleich zum Stand der Technik SdT1.

Es zeigt sich für AB2 das im Wesentlichen gleiche Ergebnis wie für AB1 in Figur 1 - womit unter anderen dargelegt ist, dass das erfindungsgemäße stöchiometrische Verhältnis auch bei vorhandenem Vorvernetzer eingesetzt werden kann bzw. ein Vorvernetzer keine negativen Auswirkungen auf die genannten Vorteile des stöchiometrische Verhältnisses zeigt.

## Patentansprüche

1. Elektroband oder -blech mit einer auf wenigstens einer seiner Flachseiten vorgesehenen, thermohärtbaren wasserbasierten Schmelzklebelackschicht, aufweisend
Epoxidharz oder einer Mischung unterschiedlicher Epoxidharze und
einen bei Raumtemperatur latenten Härter mit mindestens zwei Aminogruppen, welche primäre und/oder sekundäre Aminogruppen sind,
**dadurch gekennzeichnet, dass** das stöchiometrische Verhältnis der Epoxidgruppen des Epoxidharzes oder der Epoxidharze zu den Wasserstoffatomen der mindestens zwei Aminogruppen des latenten Härters im Bereich von 1,33 zu 1 bis 5 zu 1, insbesondere 2,0 zu 1 bis 2,7 zu 1, liegt.

2. Elektroband oder -blech nach Anspruch 1, **dadurch gekennzeichnet, dass** der latente Härter genau zwei primäre Aminogruppen aufweist.

3. Elektroband oder -blech nach einem der Ansprüche 1 oder 2, **dadurch gekennzeichnet, dass** der latente Härter eine Cyanamidbasis aufweist, insbesondere Dicyandiamid ist, vorzugsweise Dicyandiamid als einziger latenter Härter in der Schmelzklebelackschicht enthalten ist.

4. Elektroband oder -blech nach einem der Ansprüche 1 bis 3, **dadurch gekennzeichnet, dass** die thermohärtbare wasserbasierte Schmelzklebelackschicht
35 bis 55 Gew.-%, insbesondere 40 bis 50 Gew.-%, eines Epoxidharzes oder einer Mischung unterschiedlicher Epoxidharze mit einer mittleren molaren Masse von 1000 bis 2000 g/mol und
0,15 bis 1,0 Gew.-%, insbesondere 0,4 bis 0,6 Gew.-%, des latenten Härters, insbesondere Dicyandiamid, aufweist.

5. Elektroband oder -blech nach einem der Ansprüche 1 bis 4, **dadurch gekennzeichnet, dass** die thermohärtbare wasserbasierte Schmelzklebelackschicht als Rest Wasser sowie, insbesondere 4 bis 20 Gew.-%, Co-Löser, vorzugsweise 1-Methoxy-propanol als Co-Löser, aufweist.

6. Elektroband oder -blech mit einer, insbesondere bei 180 bis 280 °C Bandtemperatur, getrockneten thermohärtbaren Schmelzklebelackschicht nach einem der Ansprüche 1 bis 5.

7. Elektroband oder -blech nach Anspruch 6, **dadurch gekennzeichnet, dass** die, insbesondere bei 180 bis 280°C Bandtemperatur, getrocknete thermohärtbare Schmelzklebelackschicht aufweist:
75 bis 92,8 Gew.-%, insbesondere 80 bis 90 Gew.-%, eines Epoxidharzes oder einer Mischung unterschiedlicher Epoxidharze mit einer mittleren molaren Masse von 1000 bis 2000 g/mol,
0,3 bis 2 Gew.-%, insbesondere 0,8 bis 1,2 Gew.-%, des latenten Härters, insbesondere Dicyanamid.

8. Elektroband oder -blech nach einem der Ansprüche 1 bis 7, **dadurch gekennzeichnet, dass** die Schmelzklebelackschicht zusätzlich ein organisches Triamin, insbesondere ein Polyethertriamin, vorzugsweise ein Polyoxypropylentriamin, als einen mit Epoxidharz bei Raumtemperatur verbindenden Vorvernetzer aufweist.

9. Elektroband oder -blech nach Anspruch 8, **dadurch gekennzeichnet, dass** die thermohärtbare wasserbasierte Schmelzklebelackschicht
35 bis 55 Gew.-%, insbesondere 40 bis 50 Gew.-%, eines Epoxidharzes oder einer Mischung unterschiedlicher Epoxidharze mit einer mittleren molaren Masse von 1000 bis 2000 g/mol,
0,1 bis 2 Gew.-%, insbesondere 0,2 bis 1,0 Gew.-%, des Triamin als Vorvernetzer mit einer mittleren molaren Masse von 350 bis 550 g/mol und
0,15 bis 1,0 Gew.-%, insbesondere 0,4 bis 0,6 Gew.-%, des latenten Härters, insbesondere Dicyandiamid, aufweist.

10. Elektroband oder -blech nach Anspruch 8 oder 9, **dadurch gekennzeichnet, dass** die, insbesondere bei 180 bis 280°C Bandtemperatur, getrocknete thermohärtbare Schmelzklebelackschicht aufweist:
75 bis 92,8 Gew.-%, insbesondere 80 bis 90 Gew.-%, eines Epoxidharzes oder einer Mischung unterschiedlicher Epoxidharze mit einer mittleren molaren Masse von 1000 bis 2000 g/mol,
0,2 bis 4 Gew.-%, insbesondere 0,4 bis 2 Gew.-%, Triamin als Vorvernetzer mit einer mittleren molaren Masse von 350 bis 550 g/mol.
0,3 bis 2 Gew.-%, insbesondere 0,8 bis 1,2 Gew.-%, des latenten Härters, insbesondere Dicyanamid.

11. Elektroband oder -blech nach einem der Ansprüche 6, 7, 8 oder 10, **dadurch gekennzeichnet, dass** die, insbesondere bei 180 bis 280°C Bandtemperatur, getrocknete thermohärtbare Schmelzklebelackschicht im Wesentlichen frei von Wasser und Co-Löser ist.

12. Verfahren zur Herstellung eines Elektrobands oder -blechs nach einem der vorangegangenen Ansprüche, durch Aufbringen, insbesondere Rollenapplikation oder Aufsprühen, des thermohärtbaren wasserbasierten Schmelzklebelacklacks auf mindestens eine Flachseite des Elektrobands oder -blechs.

13. Verfahren zur Herstellung eines Blechpakets mit Blechteilen eines Elektrobands oder -blechs nach Anspruch 12, umfassend die Verfahrensschritte
Trocknung der Schmelzklebelackschicht, insbesondere bei 180 bis 280°C Bandtemperatur,
Abtrennen von Blechteilen aus dem Elektroband oder -blech,
Stapeln der Blechteile zu einem Blechpaket,
Verkleben des Blechpakets, insbesondere durch thermisches Aktivieren der Schmelzklebelackschicht, bevorzugt bei 100°C bis 250°C.

14. Blechpaket, hergestellt nach dem Verfahren des Anspruchs 13.

15. Blechpaket, hergestellt aus einem Elektroband oder -blech nach einem der Ansprüche 1 bis 11.
